# EUROPÄISCHE PATENTSCHRIFT

(11) **EP 2 764 804 B1**
(45) Veröffentlichungstag und Bekanntmachung des Hinweises auf die Patenterteilung: **14.09.2016**
(21) Anmeldenummer: 14153447.9
(22) Anmeldetag: 31.01.2014
(51) Int. Cl.: A47J 31/36

(54) **Kaffeevollautomat mit Spindelbrüheinheit**
Fully automatic coffee machine with a spindle brewing unit
Machine à café entièrement automatique avec une unité d'infusion à broche

(30) Priorität: 08.02.2013 DE 102013202148
(43) Veröffentlichungstag der Anmeldung: 13.08.2014
(73) Patentinhaber: BSH Hausgeräte GmbH, 81739 München (DE)
(72) Erfinder: Haslacher, Christian, 5303 Thalgau (AT); Huber, Michael, 6341 Ebbs (AT); Ostermaier, Albert, 83371 Stein a.d. Traun (DE); Strobl, Robert, 83246 Unterwössen (DE)

(56) Entgegenhaltungen:
- EP-A1- 0 468 915
- WO-A1-2013/098096
- DE-U1- 9 115 998

## Beschreibung

Die Erfindung betrifft einen Kaffeevollautomaten, umfassend eine Spindelbrüheinheit mit einer Brühkammer und einer Gewindespindel zum Antrieb der Brühkammer in einem Aufnahmerahmen, wobei die Brühkammer derart gelagert ist, dass sie in einer Verschwenkebene verschwenkbar ist, die auf der Spindelachse senkrecht steht und in einer Verfahrrichtung parallel zur Spindelachse verfahrbar ist. Im Besonderen betrifft die Erfindung einen Kaffeevollautomaten für Haushaltszwecke, wie er zum Beispiel in Küchen von Privathaushalten aufgestellt und betrieben wird. Die Spindelbrüheinheit umfasst regelmäßig einen Kolben, der in eine Brühkammer bzw. einen Brühzylinder eingefahren werden kann. Die dafür notwendige Bewegung der Brühkammer und des Kolbens relativ zueinander erzeugt die Gewindespindel, die ein Motor antreibt.

Einen Kaffeevollautomaten mit einer Spindelbrüheinheit offenbart zum Beispiel die DE 91 15 998 U1. Sie zeigt eine koaxial zur Längsachse einer Gewindespindel verschwenkbare Brühkammer, die über eine Kulisse von der Gewindespindel angetrieben wird. Die Gestaltung des Verschwenkmechanismus bedingt die Anordnung von Vorrichtungen zum Befüllen und Entleeren der Brühkammer. Ein aufwändiger Verschwenkmechanismus, wie er in der Druckschrift beschrieben ist, trägt zur Größe einer Spindelbrüheinheit bei und führt damit zu Dimensionen eines Kaffeevollautomaten, die vom Benutzer unter Umständen als unhandlich und unpraktisch empfunden werden können.

Der Erfindung liegt daher die Aufgabe zugrunde, einen Kaffeevollautomaten hinsichtlich seiner Brüheinheit zu vereinfachen und insbesondere ihre Abmessungen zu verringern.

Die Aufgabe wird durch einen Kaffeevollautomaten mit den in Anspruch 1 angegebenen Merkmalen gelöst. Der eingangs genannte Kaffeevollautomat wird dazu erfindungsgemäß durch eine Führungsvorrichtung weitergebildet, die das Verschwenken der Brühkammer einerseits und das Verfahren der Brühkammer anderseits sequenziell, also unabhängig voneinander und nacheinander bewirkt. Die Erfindung wendet sich also davon ab, das Verschwenken und das Verfahren der Brühkammer gleichzeitig zu vollziehen. Sie verfolgt vielmehr das Prinzip, die Bewegungen des Verschwenkens und des Verfahrens voneinander entkoppelt durchzuführen.

"Sequenziell" bedeutet, dass das Verschwenken und das Verfahren der Brühkammer nacheinander, also ohne jegliche zeitliche Überdeckung abläuft, so dass eine Bewegung in einer ersten Richtung, z. B. das Verfahren der Brühkammer von einer Ausgangsposition zu einer Endposition, abgeschlossen ist, bevor eine Bewegung in einer zweiten Richtung, z. B. das Verschwenken, einsetzt. Dabei werden abwechselnd die Hin- und Rückrichtung der ersten Bewegungen der Brühkammer in einer ersten Ebene und die Hin- und Rückrichtung der zweiten Bewegung in einer auf die erste Ebene senkrecht stehenden zweiten Ebene sequenziell vollzogen. Das kann zunächst ein Einfahren und Ausfahren und anschließend ein Ausschwenken und Einschwenken der Brühkammer sein. Eine erste und eine zweite Fläche, die die Brühkammer jeweils beim Verschwenken und beim Verfahren überstreicht, berühren sich dabei lediglich, schneiden sich aber nicht.

Um die Bewegungen des Verschwenkens und des Verfahrens voneinander zu entkoppeln, kann die Spindelbrüheinheit einen separaten Antrieb, z. B. einen Elektromotor, aufweisen, der in koordiniertem Zusammenwirken mit dem Antrieb der Gewindespindel die jeweilige Bewegung der Brühkammer bewirkt. Alternativ kann die Gewindespindel als Antriebsquelle sowohl für die Verschwenk- als auch für die Verfahrbewegung dienen, wobei die Führungsvorrichtung die sequenzielle Abfolge der Verschwenk- und der Verfahrbewegungen steuert. Dafür kann die Führungsvorrichtung Elemente zur Drehmomentumlenkung wie beispielsweise eine Kulisse oder ein Getriebe umfassen, die bzw. das eine Rotation der Spindel in eine Translation und/oder eine Rotation der Brühkammer umlenkt. Die Führungsvorrichtung kann ferner einen kulissenartigen Bereich aufweisen, der ein Verfahren der Brühkammer bewirkt, sowie einen davon getrennten Bereich, der ein Verschwenken der Brühkammer ermöglicht. Die Gewindespindel kann dabei grundsätzlich in einer beliebigen Position relativ zu einer Aufstandsfläche des Kaffeevollautomaten angeordnet sein, z. B. horizontal liegend, senkrecht stehend oder geneigt. Eine geneigte Stellung der Spindelbrüheinheit kann ein Befüllen der Brühkammer mit frischem Kaffeepulver begünstigen.

Die Verfahrbewegung der Brühkammer entlang der Gewindespindel kann zwischen einer Brühposition und einer Zwischenposition erfolgen, an der die Brühkammer ihre Bewegungsrichtung ändert und aus der heraus sie verschwenkt. Die Verfahrstrecke zwischen der Brühposition und der Zwischenposition kann zum Ausstoßen eines Tresterkuchens aus der Brühkammer genutzt werden. Aus der Zwischenposition heraus kann die Brühkammer in eine Befüllposition verschwenken. Vorher kann der Tresterkuchen beim Verschwenken in die Befüllposition oder nach Erreichen der Befüllposition abgestreift werden.

Der Vorteil der Erfindung liegt darin, dass mit der Entkoppelung der Verfahr- und der Verschwenkbewegung der Brühkammer der vertikale Verfahrweg der Brühkammer kürzer ausfallen kann als bisher. Denn nach dem Stand der Technik ist ein Teil des gesamten vertikalen Verfahrwegs der Brühkammer zum Auslösen und Aufrechterhalten der Verschwenkbewegung erforderlich. Das Verschwenken geht dort stets mit einem zusätzlichen vertikalen Verfahrweg einher, der eine gewisse Spindellänge erfordert. Damit geht eine gewisse Mindestbauhöhe herkömmlicher Kaffeevollautomaten einher. Die Erfindung dagegen ermöglicht demgegenüber eine Verkürzung der Gewindespindel, weil sie für das Verschwenken der Brühkammer keinen vertikalen Verfahrweg beansprucht und damit die Bauhöhe der Spindelbrüheinheit und dadurch die Gehäusehöhe des Kaffeevollautomaten reduziert. Die Erfindung erlaubt damit eine weitgehende Bemessung der Höhe der Spindelbrüheinheit allein anhand des Verfahrwegs, der auch die Dicke eines Tresterkuchens berücksichtigt, der nach einem Brühvorgang - in der Regel in eine Richtung orthogonal zur Längsachse der Brühkammer - aus der Brühkammer entfernt wird.

Die Erfindung erweist sich auch insofern als günstig, als mit der Brühkammer korrespondierende Bauteile, wie beispielsweise eine Befüllvorrichtung für Kaffeepulver oder ein Tresterbehälter, infolge der sequenziellen, zweidimensionalen Bewegungen der Brühkammer Platz sparender als bisher an der Spindelbrüheinheit angebunden werden können. Beispielsweise kann ein Mahlwerk für Kaffeebohnen auf der Höhe des Kolbens bzw. neben ihm positioniert werden, so dass die Höhe der gesamten Brüheinheit weiter vermindert werden kann und/oder gewonnener Raum für einen größeren Kaffeebohnenbehälter nutzbar ist. Die Verkürzung des Verfahrwegs der Brühkammer kann darüber hinaus auch reinigungsbedürftige Befüllschächte oder-rutschen verkürzen.

Gemäß dem Stand der Technik steuert eine Kulisse das Verschwenken der Brühkammer mittels einer Übersetzung der Rotationsbewegung der Gewindespindel. Eine erfindungsgemäße Trennung der Verfahr- und der Verschwenkbewegung könnte einen eigenen Antrieb für eine der beiden Bewegungen nahe legen. Nach einer bevorzugten Ausführungsform des Kaffeevollautomaten dagegen kann die Führungsvorrichtung das Verschwenken der Brühkammer koaxial zur Spindelachse sowie winkelgleich und drehrichtungsgleich zu einer Rotation der Gewindespindel bewirken oder zulassen. "Zulassen" bedeutet, dass die Gestaltung der Führungsvorrichtung in einem Abschnitt an einem Ende der Gewindespindel das Verschwenken der Brühkammer in einem definierten Schwenkabschnitt synchron mit der Spindel erlaubt. Dazu bietet die Führungsvorrichtung dem Verschwenken in diesem Abschnitt keinen mechanischen Widerstand, der eine Verfahrbewegung erzwingen würde. Das Verschwenken als ein Mitdrehen der Brühkammer bei einer Rotation der Gewindespindel beruht auf der Haftreibung zwischen einem Innengewinde der Mitnahmeeinheit der Brühkammer und der Spindel. Die Erfindung macht sich also die Gewindespindel als unmittelbare Antriebsquelle zunutze, indem das Drehmoment der Gewindespindel auf die Brühkammer übertragen wird und sie ohne eine Über- oder Untersetzung in die gleiche Drehrichtung und um den gleichen Winkel verschwenkt. Der Entfall eines Getriebes oder einer Kulisse reduziert Reibungsverluste und spart damit Energie, weil im Gegensatz zum Stand der Technik die Haftreibung zwischen Brühkammer und Spindel beim Verschwenken nicht überwunden werden muss. Gegenüber einer Kulisse ist diese Lösung zudem konstruktiv erheblich einfacher, kostengünstiger realisierbar und weniger fehleranfällig.

Nach einer weiteren bevorzugten Ausgestaltungsform kann die Führungsvorrichtung des erfindungsgemäßen Kaffeevollautomaten zum Verschwenken der Brühkammer im Bereich eines ersten Endes der Gewindespindel zumindest teilweise führungsfrei ausgebildet sein. In ihrem führungsfreien Bereich kann eine Aussparung in einem an sich durchgehenden Führungselement der Führungsvorrichtung angeordnet sein, oder das Führungselement kann früher als herkömmliche Führungselemente enden. Jedenfalls ist erfindungsgemäß gewährleistet, dass in diesem Bereich kein mechanischer Widerstand, etwa in Form einer Kulisse, einer Bahn oder eines Anschlags gegen das Verschwenken der Brühkammer existiert.

Als erstes Ende der Gewindespindel wird ein unteres, zur Aufstandsfläche des Kaffeevollautomaten weisendes Ende der Gewindespindel betrachtet, das zweite Ende liegt dann folglich am oberen Ende der Gewindespindel. Regelmäßig wird die Brühkammer im Bereich des unteren Spindelendes verschwenkt. Damit bietet sie den Vorteil eines unkomplizierten und raumökonomischen Zusammenwirkens der Brühkammer beispielsweise mit einer Befülleinrichtung zum Befüllen der Brühkammer mit Kaffeepulver, die derart neben dem Kolben angeordnet werden kann, dass sie die Bauhöhe der Spindelbrüheinheit nicht unnötig vergrößert.

Auch die erfindungsgemäße Führungsvorrichtung kann eine Kulisse und somit eine Gleitbahn darstellen, die einen Kulissenstein zwangsführt und jedenfalls das Verfahren der Brühkammer steuert. Vorzugsweise kann die Führungsvorrichtung eine kürzere Kurzschiene, die sich nur über einen oberen Abschnitt der Gewindespindel im Bereich ihres zweiten, oberen Endes erstreckt, sowie eine längere Langschiene weitgehend entlang der Gesamterstreckung der Gewindespindel vom ersten, unteren Ende bis zum zweiten, oberen Ende umfassen, wobei die Langschiene und die Kurzschiene räumlich voneinander getrennt und parallel zur Spindelachse angeordnet sind. Sie führen die Brühkammer, indem sie unmittelbar an ihr oder an der Mitnahmeeinheit gleitend anliegen. In einem oberen Abschnitt, in dem die Kurzschiene und die Langschiene parallel nebeneinander liegen, führen sie gemeinsam die Brühkammer senkrecht, indem sie ein Ausschwenken der Brühkammer verhindern. Unterhalb der Kurzschiene kommt die Brühkammer frei und kann verschwenken. Mit ihrer über die Kurzschiene überstehenden Strecke dient die Langschiene zur Begrenzung eines Zurück- bzw. Einschwenkens der Brühkammer. Die Lage der Kurzschiene einerseits und der Langschiene andererseits bezüglich der Brühkammer ist abhängig von der Rotationsrichtung und der Gewinderichtung der Spindel, die das Verfahren und das Verschwenken der Brühkammer antreibt. Diese Ausgestaltungsform begünstigt eine unkomplizierte Konstruktion des Brühkammergehäuses aus wenigen Bestandteilen, z. B. als Spritzgusselement, welches nicht nur die genannten Funktionen erfüllt, sondern auch zur Führungsvorrichtung komplementäre Führungselemente enthält.

Grundsätzlich können die Langschiene und die Kurzschiene separate Bestandteile der Spindelbrüheinheit bilden. Vorzugsweise können sie jedoch einen integralen Bestandteil der Spindelbrüheinheit darstellen, beispielsweise als Stege am Rahmen der Spindelbrüheinheit oder lediglich als dessen Kanten ausgebildet sein. Der Rahmen der Spindelbrüheinheit kann beispielsweise als halboffener C-Rahmen oder als geschlossener Aufnahmerahmen zur Lagerung der Gewindespindel und des Kolbens ausgebildet sein. Er kann z. B. als Metallrahmen oder als Kunststoff-Spritzgussteil ausgebildet sein. Die beiden Schienen können unmittelbar an den- bzw. demjenigen Rahmenabschnitt(en) angeordnet bzw. ausgebildet sein, die bzw. der parallel zur Gewindespindel verläuft. Die Ausbildung der Lang- und der Kurzschiene als Stege oder Kanten und/oder als Flächen des Rahmens bietet den Vorteil, dass die Kräfte, die jedenfalls bei einem Verfahren der Brühkammer auf Bereiche der Schienen wirken, unmittelbar in den Rahmen und ggf. weiter in das Gehäuse des Kaffeevollautomaten abgeleitet und darin aufgenommen werden. Dies ermöglicht eine unkomplizierte und gleichzeitig ausreichend stabile Konstruktion.

Die Langschiene und die Kurzschiene können beim Verfahren der Brühkammer unter Wahrung einer geeigneten Distanz zueinander grundsätzlich an einer beliebigen Seite der Brühkammer anliegen. In einer bevorzugten Ausprägung des Kaffeevollautomaten liegen die Langschiene und die Kurzschiene auf einer der Brühkammer gegenüberliegenden Seite der Gewindespindel. Der dortige Gehäuseabschnitt, nämlich der spindelparallele Abschnitt des Aufnahmerahmens, ist ohnehin erforderlich. Daran lassen sich die Kurz- und die Langschiene ohne erheblichen konstruktiven Zusatzaufwand anbringen. Der Vorteil der erfindungsgemäßen Anordnung der Schienen liegt darin, dass sie ohne zusätzlichen Raumbedarf in den Aufnahmerahmen der Spindelbrüheinheit integriert werden können, was z. B. für eine gute Zugänglichkeit der Brühkammer zu Reinigungszwecken sorgt.

Gemäß einer bevorzugten Ausführungsform kann der Kaffeevollautomat einen ersten Anschlag am Gehäuse der Spindelbrüheinheit aufweisen, der zur Begrenzung des Ausschwenkens der Brühkammer im Bereich des ersten Endes der Gewindespindel dient. Er kann als Fläche am Gehäuse oder am bzw. im Rahmen der Spindelbrüheinheit ausgebildet sein und kann z. B. an einem vertikalen Segment des Rahmens der Gewindespindel liegen. Er korrespondiert mit einem geeignet gestalteten Gegenanschlag an der Brühkammer, der beispielsweise eine Anschlagfläche am Verbindungsarm der Brühkammer sein kann. Der erfindungsgemäße erste Anschlag limitiert zuverlässig das Ausschwenken der Brühkammer, so dass es nicht nur eine Drehbewegung der Spindel definiert.

Der beschriebene erste Anschlag ist vorzugsweise derart am Gehäuse oder im Rahmen der Spindelbrüheinheit angeordnet, dass er das Ausschwenken der Brühkammer relativ zu einer Position der Brühkammer während des Verfahrens auf einen Schwenkwinkel von mindestens 30°, vorzugsweise mindestens 50°, sowie von höchstens 100°, vorzugsweise höchstens 80°, begrenzt. Ein derart limitierter Schwenkwinkel ermöglicht eine geringe Breite der Spindelbrüheinheit innerhalb eines Kaffeevollautomaten. Er reicht aus, so dass weitere Vorrichtungen an der Spindelbrüheinheit, z. B. zum Befüllen und Entleeren der Brühkammer, sie auf kurzen Wegen bedienen können.

Das Einschwenken der Brühkammer bewirkt unter Haftreibung jedenfalls eine Rotation der Gewindespindel in Gegenrichtung zur Drehrichtung beim Ausschwenken. Vorzugsweise kann der Kaffeevollautomat zusätzlich ein Rückstellmittel am Gehäuse der Spindelbrüheinheit umfassen, das zur Unterstützung des Einschwenkens der Brühkammer dient, indem es zu Beginn der Einschwenkbewegung auf die Brühkammer ein Losbrechmoment ausübt. Dazu kann es beim Ausschwenken der Brühkammer belastet bzw. aktiviert werden. Das Rückstellmittel kann einen Elektromotor zum Einschwenken der Brühkammer umfassen. Vorzugsweise kann das Rückstellmittel eine Feder, z. B. eine Schraubenfeder, Blattfeder oder Drehfeder sein, die beim Ausschwenken vorgespannt wird und damit ein Rückstellmoment in eine Einschwenkrichtung der Brühkammer aufbaut. Ein Federmechanismus ist kostengünstig und wartungsarm und unterstützt die Überwindung einer eventuellen Haftreibung, die insbesondere bei einem Verkanten der Gewinde der Mitnahmeeinheit und der Spindel gegeneinander und/oder bei Verunreinigungen der Laufflächen der Gewinde, z. B. durch Kaffeepulver, entstehen kann.

Prinzipiell kann ein Ende eines Gewindeverlaufs der Spindel oder ein Aufsetzen der Brühkammer ihren Verfahrweg am ersten, unteren Ende der Spindel begrenzen. Nach einer vorteilhaften Ausgestaltung der Erfindung kann der Kaffeevollautomat aber einen zweiten Anschlag zur Begrenzung des vertikalen Verfahrwegs der Brühkammer umfassen. Der zweite Anschlag kann im Gehäuse oder im Rahmen der Spindelbrüheinheit im Bereich des unteren Endes der Spindel liegen, so dass die Brühkammer gezielt auf ihm aufsetzt. Er ist dann vorzugsweise mit einer ebenen, waagrechten Anschlagfläche ausgebildet, damit die Brühkammer beim Verschwenken nicht an ihm hängen bleibt. Beispielsweise kann er als erhabene Schiene über eine Bodenplatte des Aufnahmerahmens der Brüheinheit verlaufen. Vorzugsweise kann der zweite Anschlag als Zapfen oder Rippe am Gewinde am unteren Ende der Spindel angebracht sein, so dass er das abwärts gerichtete Verfahren der Brühkammer auf dem Gewinde selbst begrenzt. In dieser Form erfordert er den geringsten Herstellungsaufwand, weil er beim Verschwenken der Brühkammer mitdreht. Der erfindungsgemäße zweite Anschlag bietet jedenfalls den Vorteil eines definierten Abstands zwischen einer Unterseite des Verbindungsarms und einem Ende der Spindel bzw. einer Bodenplatte des Gehäuses. Er verhindert, dass sich die Brühkammer, ggf. begünstigt durch Verunreinigungen durch feuchtes Kaffeepulver, am unteren Ende der Spindel festfährt. Damit trägt er zur Zuverlässigkeit der Spindelbrüheinheit bei.

Das Prinzip der Erfindung wird im Folgenden anhand einer Zeichnung beispielshalber noch näher erläutert. In der Zeichnung zeigen
- Figur 1a:: einen schematischen Vertikalschnitt durch einen Kaffeevollautomaten in einer Brühposition,
- Figur 1b:: eine Schnittansicht einer Spindelbrüheinheit des Kaffeevollautomaten entlang der Schnittlinie I - I in Figur 1a,
- Figur 2a:: einen schematischen Vertikalschnitt gemäß Figur 1 in einer Zwischenposition,
- Figur 2b:: eine Schnittansicht der Spindelbrüheinheit entlang der Schnittlinie II - II in Figur 2a,
- Figur 3a:: einen schematischen Vertikalschnitt gemäß Figur 1 in einer Befüllposition,
- Figur 3b:: eine Schnittansicht der Spindelbrüheinheit entlang der Schnittlinie III - III in Figur 3a.

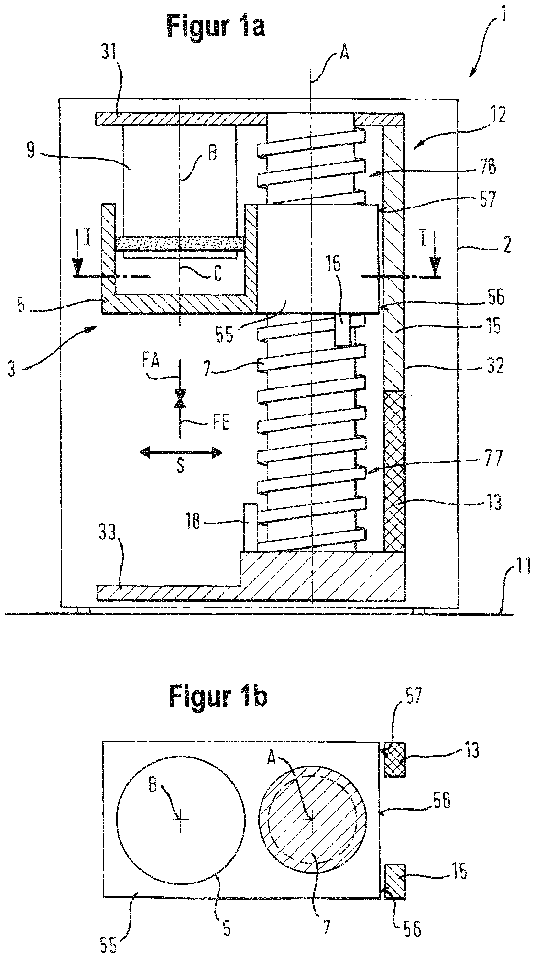

Figur 1 a zeigt einen schematischen Vertikalschnitt durch einen Kaffeevollautomaten 1 in einer Brühposition, der auf einer horizontalen Aufstandsfläche 11 steht, zum Beispiel auf einer Küchenarbeitsplatte. Innerhalb eines Gehäuses 2 des Kaffeevollautomaten 1 ist in einem C-förmig ausgebildeten Aufnahmerahmen 12 eine Spindelbrüheinheit 3 angeordnet. Der Aufnahmerahmen 12 setzt sich aus einer horizontalen Bodenplatte 33, einem vertikalen Ständer 32 und einer horizontalen Deckplatte 31 zusammen und bestimmt weitgehend die Bauhöhe des Gehäuses 2. Parallel zum Ständer 32 erstreckt sich eine vertikale Gewindespindel 7, die in der Bodenplatte 33 sowie in der Deckplatte 31 drehbar gelagert ist. Für eine Rotation der Gewindespindel 7 um ihre Spindelachse A sorgt ein nicht dargestellter Elektromotor, der zum Beispiel in einer erhöhten Sockelzone der Bodenplatte 33 sitzen kann. Die Spindelbrüheinheit 3 umfasst eine Brühvorrichtung mit einer zylindrischen Brühkammer 5 und einem zylindrischen Kolben 9. Der Kolben 9 ist ortsfest an der Deckplatte 31 montiert und passt in einen Hohlraum der Brühkammer 5, die zum Verpressen und Brühen von Kaffee gegen ihn verfahren ist. In der dargestellten Brühposition stehen eine vertikale Längsachse C der Brühkammer 5 und eine vertikale Längsachse B des Kolbens 9 koaxial zueinander. Die Spindelachse A verläuft zu den beiden Achsen B, C parallel.

Die Brühkammer 5 lässt sich durch Rotation der Spindel 7 bewegen. Als Bestandteil ihres Gehäuses verfügt die Brühkammer 5 dazu über einen Verbindungsarm 55 mit einem Innengewinde, der wie eine Spindelmutter auf dem Außengewinde der Gewindespindel 7 sitzt. An einer Unterseite des Verbindungsarms 55 sitzt hier noch ein zusätzlicher Anschlag 16, der als vertikal nach unten weisende Rippe ausgebildet ist. Am unteren, ersten Ende der Gewindespindel 7, das zur Bodenplatte 33 weist, ist ein Anschlag 18 in der Form einer abstehenden Rippe angebracht, der einen nutzbaren Abschnitt des Außengewindes und damit ein Abwärtsfahren des Verbindungsarms 55 zur Bodenplatte 33 hin begrenzt.

Bestandteile des Rahmens 12 bzw. des Ständers 32 sind eine Langschiene 13 und eine in Figur 1a davor liegende Kurzschiene 15, die jeweils einen rechteckigen Querschnitt aufweisen, als Führungsvorrichtung der Brühkammer 5 dienen und vertikal sowie parallel zur Spindelachse A verlaufen. Die Langschiene 13 erstreckt sich zwischen einem unteren Bereich 77 und einem oberen Bereich 78 der Gewindespindel 7 und somit weitgehend entlang ihrer Gesamtlänge. Die Kurzschiene 15 erstreckt sich lediglich in einem oberen Bereich 78 der Gewindespindel 7 über etwa 2/3 ihrer Gesamtlänge. Die Schienen 13, 15 liegen symmetrisch zur Spindelachse A und in der Brühposition plan an einer Schmalseite 58 des Verbindungsarms 55 der Brühkammer 5 an (siehe Figur 1 b), die ihr gegenüber abgewandt und jenseits der Gewindespindel 7 liegt. Sie stützen den Verbindungsarm 55 jeweils im Bereich seiner vertikalen Außenkanten 56, 57 gegen ein Mitdrehen ab, wenn sich die Gewindespindel 7 dreht.

Eine Linksdrehung der Gewindespindel 7 um ihre Spindelachse A (siehe Figur 1 b) führt zu einem achsparallelen Verfahren der Brühkammer 5 aus der Brühposition im oberen Bereich 78 in einer vertikal abwärts gerichteten Ausfahrrichtung FA. Das Verfahren der Brühkammer 5 erfordert ein ausreichend hohes Drehmoment der Gewindespindel 7, um eine Haftreibung zwischen dem Innengewinde des Verbindungsarms 55 und dem Außengewinde der Gewindespindel 7 sowie zwischen den beiden Schienen 13, 15 einerseits und der Seitenfläche 58 andererseits zu überwinden.

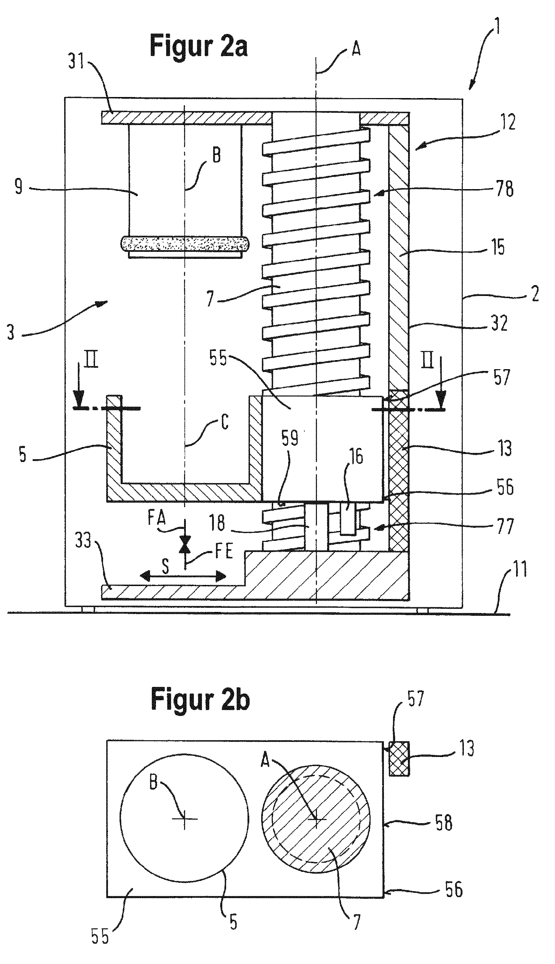

Die Linksdrehung der Gewindespindel 7 lässt damit die Brühkammer 5 aus der Brühposition gemäß Figur 1 in eine Zwischenposition gemäß Figur 2a fahren. Die Zwischenposition unterscheidet sich von der in Figur 1 a gezeigten Brühposition lediglich durch die Position der Brühkammer 5 in einem unteren Bereich 77 der Gewindespindel 7. Jetzt liegt der Verbindungsarm 55 nur noch an der Langschiene 13 an, da er den Bereich der Kurzschiene 15 verlassen hat, die nur im oberen Bereich 78 der Gewindespindel 7 verläuft. Er stößt mit seiner Unterseite 59 am Anschlag 18 an, der ein weiteres Abwärtsfahren der Brühkammer 5 verhindert, das Verfahren in dieser Richtung also beendet. Dabei wirkt der Anschlag 16 mit dem Anschlag 18 zusammen, der ihn bei einer fortgesetzten Linksdrehung mit nimmt und so das Ausschwenken des Verbindungsarms 55 sicherstellt. Der Anschlag 16 unterstützt damit zusätzlich die Funktion des Anschlags 18.

Ab diesem Zeitpunkt aber existiert mangels Kurzschiene 15 im unteren Bereich 77 (siehe Figur 2b) kein Widerstand mehr gegen ein Mitdrehen des Verbindungsarms 55 auf der Spindel 7 und damit gegen das Verschwenken der Brühkammer 5. Die Zwischenposition stellt also die Trennstelle zwischen dem Verfahren der Brühkammer 5 einerseits und ihrem Verschwenken andererseits dar.

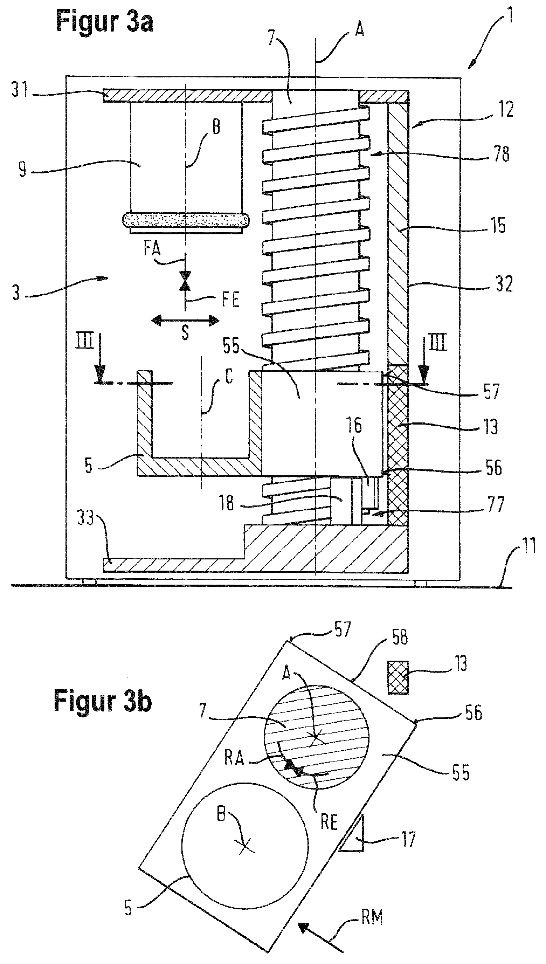

Zwischen den Figuren 2 und 3 verschwenkt die Brühkammer 5 in einer horizontalen Verschwenkebene S und um die Spindelachse A. Ihre Ausschwenkrichtung RA entspricht der Drehrichtung der Spindel 7 und führt sie aus der Zwischenposition in eine Befüllposition. Während des Ausschwenkens kann ein nicht gezeigter Abstreifer einen Tresterkuchen von der Brühkammer 5 abstreifen.

Figur 3a unterscheidet sich von der in Figur 2a gezeigten Zwischenposition wiederum durch die Position des Verbindungsarms 55 bzw. der Brühkammer 5 relativ zur Gewindespindel 7. Die Brühkammer 5 hat sich in Drehrichtung der Spindel 7 mitgedreht und befindet sich in einem ausgeschwenkten Zustand im unteren Bereich 77 der Gewindespindel 7, und zwar in einer Befüllposition. In der Ansicht der Figur 3a verläuft die Brühkammerachse C daher nicht mehr koaxial, sondern nur noch parallel zur Kolbenachse B. Ein Anschlag 17 (siehe Figur 3b), der beispielsweise am Rahmen 12 angebracht sein kann, begrenzt das Ausschwenken des Verbindungsarms 55 der Brühkammer 5 in der Verschwenkebene S. Er limitiert das Ausschwenken der Brühkammer 5 in der Ausschwenkrichtung RA auf einen Schwenkwinkel von ca. 60°. In dieser Befüllposition gemäß Figur 3 ist die Brühkammer 5 gegenüber dem Kolben 9 weit genug ausgeschwenkt, so dass sie gut zugänglich ist und mit Kaffeepulver beschickt werden kann.

Dazu kann eine nicht dargestellte Feder als Rückstellmittel mit der Rückstellwirkung RM das Einschwenken der Brühkammer 5 in der Einschwenkrichtung RE unterstützen. Die Feder wird beim Ausschwenken der Brühkammer 5 belastet, die dabei aufgebaute Rückstellkraft RM wird beim Einschwenken der Brühkammer 5 in Bewegungsenergie umgesetzt und treibt zusammen mit der Gewindespindel 7 die Brühkammer 5 in der Einschwenkrichtung RE an.

Die Langschiene 15 beendet das Einschwenken der Brühkammer 5 bei Erreichen der Zwischenposition (vgl. Figur 2). Ab diesem Zeitpunkt bewirkt sie das Verfahren in der Einfahrrichtung FE, indem sie den Verbindungsarm 55 am Mitdrehen auf der Spindel 7 hindert. Das Drehmoment für den Antrieb der Gewindespindel 7 ist so einzustellen, dass es den Widerstand der Haftreibung zwischen dem Innengewinde des Verbindungsarms 55 und dem Außengewinde der Gewindespindel 7 überwindet. Infolgedessen bewegt sich der Verbindungsarm 55 an der Gewindespindel 7 aufwärts, bis sie die in Figur 1 gezeigte Brühposition erreicht hat. Nach Abschluss des Brühprozesses beginnt die oben beschriebene Bewegungsfolge von neuem.

Da es sich bei den vorhergehenden, detailliert beschriebenen Kaffeevollautomaten um Ausführungsbeispiele handelt, können sie in üblicher Weise vom Fachmann in einem weiten Umfang modifiziert werden, ohne den Bereich der Erfindung zu verlassen. Insbesondere können auch die konkreten Ausgestaltungen der Führungsschienen in anderer Form als in der hier beschriebenen erfolgen. Ebenso kann die Spindelbrüheinheit in einer anderen Form ausgestaltet sein, wenn dies aus Platzgründen bzw. designerischen Gründen notwendig ist. Der Gegenstand der Erfindung lässt sich zudem mit den Lehren der Anmeldungen Nr. 201203222, Nr. 201203223 und Nr. 201203225 des Anmelders vom selben Tage vorteilhaft kombinieren. Weiter schließt die Verwendung der unbestimmten Artikel "ein" bzw. "eine" nicht aus, dass die betreffenden Merkmale auch mehrmals vorhanden sein können.

### Bezugszeichenliste

- 1: Kaffeevollautomat
- 2: Gehäuse
- 3: Spindelbrüheinheit
- 5: Brühkammer
- 7: Gewindespindel
- 9: Kolben
- 11: Aufstandsfläche
- 12: (Aufnahme-)Rahmen
- 13: Langschiene
- 15: Kurzschiene
- 16 bis 17: Anschlag
- 18: Anschlag des Rahmens 12
- 31: Deckplatte des Rahmens 12
- 32: Ständer des Rahmens 12
- 33: Bodenplatte des Rahmens 12
- 55: Verbindungsarm
- 56 bis 57: Außenkante des Verbindungsarms 55
- 58: Schmalseite des Verbindungsarms 55
- 59: Unterseite des Verbindungsarms 55
- 77: Unterer Bereich der Gewindespindel 7
- 78: Oberer Bereich der Gewindespindel 7

- A: Spindelachse
- B: Kolbenachse
- C: Brühkammerachse
- FA: Ausfahrrichtung
- FE: Einfahrrichtung
- RA: Ausschwenkrichtung
- RE: Einschwenkrichtung
- RM: Rückstellwirkung
- S: Verschwenkebene

## Patentansprüche

1. Kaffeevollautomat (1), umfassend eine Spindelbrüheinheit (3) mit einer Brühkammer (5) und einer Gewindespindel (7) zum Antrieb der Brühkammer (5), wobei die Brühkammer (5) derart angeordnet ist, dass sie in einer Verschwenkebene (S) orthogonal zu der Spindelachse (A) verschwenkbar und in einer Verfahrrichtung (F) parallel zur Spindelachse (A) verfahrbar ist, **gekennzeichnet durch**
eine Führungsvorrichtung (13, 15), die das Verschwenken (RA, RE) der Brühkammer (5) einerseits und das Verfahren (FA, FE) der Brühkammer (5) anderseits sequenziell bewirkt.

2. Kaffeevollautomat nach Anspruch 1, **dadurch gekennzeichnet, dass** die Führungsvorrichtung (13, 15) das Verschwenken (RA, RE) koaxial zur Spindelachse (A) sowie winkelgleich und drehrichtungsgleich zu einer Rotation der Gewindespindel (7) bewirkt.

3. Kaffeevollautomat nach einem der vorhergehenden Ansprüche, **dadurch gekennzeichnet, dass** die Führungsvorrichtung (13, 15) zum Verschwenken (RA, RE) im Bereich eines ersten Endes (77) der Gewindespindel (7) teilweise führungsfrei ausgebildet ist.

4. Kaffeevollautomat nach Anspruch 3, **dadurch gekennzeichnet, dass** die Führungsvorrichtung eine kürzere Kurzschiene (15) im Bereich eines zweiten Endes der Gewindespindel (7) sowie eine längere Langschiene (13) entlang einer Erstreckung der Gewindespindel (7) umfasst, die räumlich voneinander getrennt und parallel zur Spindelachse (A) angeordnet sind und beim Verfahren (FA, FE) und Verschwenken (RA, RE) mit einem Gehäuse (55) der Brühkammer (5) im Bereich von Außenkanten (56, 57) des Gehäuses (55) zusammenwirken.

5. Kaffeevollautomat nach Anspruch 4, **dadurch gekennzeichnet, dass** die Langschiene (13) und die Kurzschiene (15) als Kanten eines Gehäuses (12) der Spindelbrüheinheit (3) ausgebildet sind.

6. Kaffeevollautomat nach Anspruch 4 oder 5, **dadurch gekennzeichnet, dass** die Langschiene (13) und die Kurzschiene (15) auf einer der Brühkammer (5) gegenüber liegenden Seite der Gewindespindel (7) angeordnet sind.

7. Kaffeevollautomat nach Anspruch 5 oder 6, **gekennzeichnet durch** einen ersten Anschlag (17) am Gehäuse (33) der Spindelbrüheinheit (3) zur Begrenzung eines Ausschwenkens (RA) der Brühkammer (5) im Bereich des ersten Endes (77).

8. Kaffeevollautomat nach Anspruch 7, **dadurch gekennzeichnet, dass** der erste Anschlag (17) das Ausschwenken (RA) der Brühkammer (5) relativ zu einer Position der Brühkammer (5) während des Verfahrens auf einen Schwenkwinkel von mindestens 30°, vorzugsweise mindestens 50° sowie von höchstens 100°, vorzugsweise höchstens 80° begrenzt.

9. Kaffeevollautomat nach Anspruch 7 oder 8, **gekennzeichnet durch** ein Rückstellmittel (RM) am Gehäuse (33) der Spindelbrüheinheit (3) zur Unterstützung eines Einschwenkens (RE) der Brühkammer (5), welches beim Ausschwenken (RA) belastet wird.

10. Kaffeevollautomat nach Anspruch 7, **gekennzeichnet durch** einen zweiten Anschlag (18) zur Begrenzung eines Ausfahrens (FA) der Brühkammer (5) am ersten Ende (77).

## Claims

1. Fully automatic coffee maker (1), comprising a spindle brewing unit (3) with a brewing chamber (5) and a threaded spindle (7) for driving the brewing chamber (5), wherein the brewing chamber (5) is arranged such that it can be swivelled in a swivel plane (S) orthogonally to the spindle axis (A) and can be linearly moved in a movement direction (F) in parallel to the spindle axis (A), **characterised by**
a guide apparatus (13, 15) which effects the swivelling (RA, RE) of the brewing chamber (5) on the one hand and the linear motion (FA, FE) of the brewing chamber (5) on the other hand sequentially.

2. Fully automatic coffee maker according to claim 1, **characterised in that** the guide apparatus (13, 15) effects the swivelling (RA, RE) coaxially to the spindle axis (A) and at the same angle and same rotational direction to a rotation of the threaded spindle (7).

3. Fully automatic coffee maker according to one of the preceding claims, **characterised in that** the guide apparatus (13, 15) is embodied to swivel (RA, RE) in the area of a first end (77) of the threaded spindle (7) partially without a guide.

4. Fully automatic coffee maker according to claim 3, **characterised in that** the guide apparatus comprises a shorter short rail (15) in the area of a second end of the threaded spindle (7) and a longer long rail (13) along an extension of the threaded spindle (7), which are arranged physically separated from one another and in parallel to the spindle axis (A) and during the linear motion (FA, FE) and swivelling (RA, RE) interact with a housing (55) of the brewing chamber (5) in the area of outer edges (56, 57) of the housing (55).

5. Fully automatic coffee maker according to claim 4, **characterised in that** the long rail (13) and the short rail (15) are embodied as edges of a housing (12) of the spindle brewing unit (3).

6. Fully automatic coffee maker according to claim 4 or 5, **characterised in that** the long rail (13) and the short rail (15) are arranged on a side of the threaded spindle (7) which faces the brewing chamber (5).

7. Fully automatic coffee maker according to claim 5 or 6, **characterised by** a first stop (17) on the housing (33) of the spindle brewing unit (3) for restricting a swivelling-out (RA) of the brewing chamber (5) in the area of the first end (77).

8. Fully automatic coffee maker according to claim 7, **characterised in that** the first stop (17) restricts the swivelling-out (RA) of the brewing chamber (5) relative to a position of the brewing chamber (5) during the linear motion to a swivel angle of at least 30°, preferably at least 50°, and at most 100°, preferably at most 80°.

9. Fully automatic coffee maker according to claim 7 or 8, **characterised by** a restoring means (RM) on the housing (33) of the spindle brewing unit (3) to assist with a swivelling-in (RE) of the brewing chamber (5), which is stressed during swivelling-out (RA).

10. Fully automatic coffee maker according to claim 7, **characterised by** a second stop (18) for restricting a moving-out (FA) of the brewing chamber (5) at the first end (77).

## Revendications

1. Machine à café (1) entièrement automatique, comprenant une unité de percolation à broche (3) munie d'une chambre de percolation (5) et d'une broche filetée (7) pour l'entraînement de la chambre de percolation (5), la chambre de percolation (5) étant disposée de manière à ce qu'elle soit orientable dans un plan de pivotement (S) de manière orthogonale par rapport à l'axe de broche (A) et déplaçable dans une direction de déplacement (F) parallèlement à l'axe de broche (A), **caractérisée par** un dispositif de guidage (13, 15) qui provoque de manière séquentielle d'une part le pivotement (RA, RE) de la chambre de percolation (5) et d'autre part le déplacement (FA, FE) de la chambre de percolation (5).

2. Machine à café entièrement automatique selon la revendication 1, **caractérisée en ce que** le dispositif de guidage (13, 15) provoque le pivotement (RA, RE) de manière coaxiale par rapport à l'axe de broche (A) ainsi que dans le même angle et dans la même direction de rotation par rapport à une rotation de la broche filetée (7).

3. Machine à café entièrement automatique selon l'une quelconque des revendications précédentes, **caractérisée en ce que** le dispositif de guidage (13, 15), pour le pivotement (RA, RE) dans la partie d'une première extrémité (77) de la broche filetée (7), est réalisé en partie sans guidage.

4. Machine à café entièrement automatique selon la revendication 3, **caractérisée en ce que** le dispositif de guidage comprenant un petit rail (15) plus court dans la partie d'une deuxième extrémité de la broche filetée (7) ainsi qu'un grand rail (13) plus grand le long d'une étendue de la broche filetée (7), lesquels sont spatialement distancés l'un de l'autre et sont disposés parallèlement à l'axe de broche (A) et coopèrent, lors du déplacement (FA, FE) et du pivotement (RA, RE), avec un boîtier (55) de la chambre de percolation (5) dans la zone de bords extérieurs (56, 57) du boîtier (55).

5. Machine à café entièrement automatique selon la revendication 4, **caractérisée en ce que** le grand rail (13) et le petit rail (15) sont réalisés comme bords d'un boîtier (12) de l'unité de percolation à broche (3).

6. Machine à café entièrement automatique selon la revendication 4 ou 5, **caractérisée en ce que** le grand rail (13) et le petit rail (15) sont disposés en face de la broche filetée (7) à l' opposé de la chambre de percolation (5).

7. Machine à café entièrement automatique selon la revendication 5 ou 6, **caractérisée par** une première butée (17) sur le boîtier (33) de l'unité de percolation à broche (3), destinée à délimiter un pivotement vers l'extérieur (RA) de la chambre de percolation (5) dans la partie de la première extrémité (77).

8. Machine à café entièrement automatique selon la revendication 7, **caractérisée en ce que** la première butée (17) délimite le pivotement vers l'extérieur (RA) de la chambre de percolation (5), par rapport à une position de la chambre de percolation (5) pendant le déplacement, à un angle de pivotement d'au moins 30°, de préférence d'au moins 50° ainsi que de maximum 100°, de préférence de maximum 80°.

9. Machine à café entièrement automatique selon la revendication 7 ou 8, **caractérisée par** un moyen de rappel (RM) sur le boîtier (33) de l'unité de percolation à broche (3) destiné à soutenir un pivotement vers l'intérieur (RE) de la chambre de percolation (5), lequel moyen de rappel est chargé lors du pivotement vers l'extérieur (RA).

10. Machine à café entièrement automatique selon la revendication 7, **caractérisée par** une deuxième butée (18) destinée à délimiter une sortie (FA) de la chambre de percolation (5) sur la première extrémité (77).
